# EUROPEAN PATENT SPECIFICATION

(11) **EP 2 915 730 B1**
(45) Date of publication and mention of the grant of the patent: **26.10.2016**
(21) Application number: 15156733.6
(22) Date of filing: 26.02.2015
(51) Int. Cl.: B62K 11/10, B62K 19/20

(54) **Saddle-ride-type vehicle**
Sattelfahrzeug
Véhicule de type à selle

(30) Priority: 03.03.2014 JP 2014040563
(43) Date of publication of application: 09.09.2015
(73) Proprietor: Honda Motor Co., Ltd., Minato-ku Tokyo 107-8556 (JP)
(72) Inventor: Atsuchi, Michio, Saitama 351-0193 (JP); Yokouchi, Kohei, Saitama 351-0193 (JP); Shinmura, Hiroyuki, Saitama 351-0193 (JP)
(74) Representative: Beder, Jens

(56) References cited:
- EP-A2- 0 581 318
- WO-A1-2013/080957
- JP-A- S6 376 769

## Description

The present invention relates to a saddle-ride-type vehicle including a vehicle body frame structure, where a power unit is supported by a frame on a rear side of a vehicle body.

Conventionally, with respect to a frame structure of a saddle-ride-type vehicle, there has been known a frame structure of a saddle-ride-type vehicle where the frame structure is formed by welding a plurality of pipes. For example, JP-A-2000-344169 discloses a vehicle body frame structure where respective one ends of a plurality of pipe members are formed as sockets, and inserting portions are inserted into the sockets and are welded to the sockets. Such a vehicle body frame structure is formed by connecting a plurality of pipes to which bending can be easily applied and hence, such a vehicle body frame structure has advantages that the bending facility can be miniaturized, and a manufacturing cost can be reduced due to easy workability.

With respect to the structure which is formed using the sockets and the inserting portions described in JP-A-2000-344169, although the vehicle body frame is divided into a plurality of parts so that bending working of the frame per se is easy, the vehicle body frame structure has a drawback that the number of connecting portions is increased. The vehicle body frame structure also has a drawback that the structure where inserting portions are formed by drawing or the like is adopted so that the number of working of connecting portions is increased.

On the other hand, from a viewpoint of enhancing fuel economy, it is necessary to ensure rigidity of a vehicle body while ensuring the reduction of weight of the vehicle body. However, to ensure rigidity of the vehicle, there arises a drawback that the weight of the vehicle body is increased from the necessity of making the vehicle body frame structure rigid and this drawback contradicts the reduction of weight of the vehicle body. In view of the above, there has been a demand for a saddle-ride-type vehicle including a frame structure which can ensure rigidity of a vehicle body while reducing the weight of the vehicle body for enhancing fuel economy and for suppressing a material cost.

EP 0 581 318 A2 shows a saddle-ride-type vehicle according to the preamble of independent claim 1.

Further in JP S6376769 A, a welding structure for a motorcycle frame is known where a fitting is provided with a projection and which is inserted into another part of a pipe such that the fitting and the pipe abut. Between the fitting and the pipe, a gap is formed that is smaller on the outside of the frame than on the inside. The fitting and the pipe are then welded by use of a robot.

WO 2013/080957 A1 discloses a frame structure for a scooter type vehicle. The frame structure comprises a head pipe, a hollow main pipe that extends downwards and to the rear of the vehicle body from the head pipe and a left-right pair of lower frames that are joint to the bottom of the main pipe and extend to the rear of the vehicle body. The main pipe is provided at the bottom end with a tube expansion section that expands in the width-wise direction of the vehicle and the front ends of the lower frames are each joint to the tube expansion section.

The invention has been made in view of the above-mentioned circumstances, and it is an object of the invention to provide a saddle-ride-type vehicle including a vehicle body frame structure which can enhance fuel economy and can suppress a material cost by ensuring rigidity of a vehicle body while reducing a weight of the vehicle body.

To achieve the above-mentioned object, the invention according to claim 1 is directed to a saddle-ride-type vehicle including a vehicle body frame structure comprising: a front frame portion on a vehicle front side having a down frame extending downwardly from a head pipe and a lower frame extending rearwardly from a lower end of the down frame; and a rear frame portion on a vehicle rear side having a rear frame extending upwardly and rearwardly from a rear end of the lower frame, wherein the front frame portion and the rear frame portion are formed into a pipe shape, a front frame rear portion is inserted into a radially inside of a rear frame front portion disposed at a front side of the rear frame portion, and the front frame rear portion is joined to the rear frame front portion by welding, and a front bracket which supports a power unit is mounted in an extending manner between the rear frame front portion and the front frame rear portion.

The invention according to claim 2 is characterized in that in addition to the constitution described in claim 1, an inner diameter of the rear frame is set larger than the outer diameter of the lower frame at the front frame rear portion.

The invention according to claim 3 is characterized in that in addition to the constitution described in claims 1 or 2, a step floor frame on which a step floor for a rider is mounted, is mounted between a lower portion of the down frame and the rear frame front portion.

The invention according to claim 4 is characterized in that in addition to the constitution described in any one of claims 1 to 3, the front bracket includes a pivoting bracket which pivotally supports the power unit, and a link supporting bracket which supports a portion of a link mechanism which supports the power unit by way of a link, and the pivoting bracket and the link supporting bracket are connected to each other.

The invention according to claim 5 is characterized in that in addition to the constitution described in any one of claims 1 to 4, a pair of left and right sub frames is joined to a lower cross frame and is joined to a portion of the head pipe at a position above a joining portion of the down frame with the head pipe, wherein the lower cross frame is disposed between the lower frames provided in left and right pair.

According to the invention described in claim 1, the front bracket which supports the power unit is mounted in an extending manner between the rear frame front portion and the front frame rear portion and hence, the front bracket may function as a reinforcing joining member of a joining portion between the rear frame front portion and the front frame rear portion. As a result, rigidity of the vehicle body frame structure can be enhanced without providing the particular reinforcing member for enhancing rigidity of the joining portion between the rear frame front portion and the front frame rear portion whereby rigidity of the frame can be enhanced while suppressing the increase of the weight of the vehicle body. Further, welding is applied to an area in the vicinity of the pivot portion (front bracket) and hence, rigidity of the pivot portion can be also increased.

According to the invention described in claim 2, the inner diameter of the rear frame portion is set larger than the outer diameter of the front frame portion. Accordingly, at the time of assembling the front frame portion and the rear frame portion to each other, in an insertion operation of the joining portion, the joining portion can be easily inserted without applying particular working to the joining portion. That is, the rear frame and the front frame can be assembled and welded together without any working. Accordingly, it is possible to provide the vehicle body frame structure having favorable workability and favorable assembling property at the time of assembling the frames.

According to the invention described in claim 3, the step floor frame is mounted between the lower portion of the down frame and the rear frame front portion and hence, the step floor frame can be mounted so as to stride over the joining portion between the front frame portion and the rear frame portion whereby rigidity of the joining portion can be further enhanced.

According to the invention described in claim 4, the front bracket has the pivoting bracket fixed to the front frame portion and the link supporting bracket fixed to the rear frame portion, and the pivoting bracket and the link supporting bracket are connected to each other. Accordingly, the front bracket is mounted such that the front bracket largely strides over the joining portion between the front frame portion and the rear frame portion and hence, rigidity of the joining portion and rigidity of areas in front of and behind the joining portion can be effectively increased.

According to the invention described in claim 5, due to the provision of the pair of left and right sub frames which is joined at the position above the joining portion of the down frame with the head pipe and is joined to the lower cross frame disposed between the left and right lower frames, rigidity of the vehicle body frame structure can be increased even when the diameter of the down frame is not set large. Further, vehicle body frame structure adopts the structure where the left and right sub frames are arranged parallel to each other in the lateral direction of the vehicle body so as to increase rigidity of the front frame portion and hence, a space in the longitudinal direction of the vehicle body can be easily ensured and hence, a space of the step floor can be largely ensured.
Fig. 1 is a side view of a saddle-ride-type vehicle provided with a vehicle body frame structure according to the invention as viewed from a left side.
Fig. 2 is a side view of an essential part of the vehicle body frame structure of the saddle-ride-type vehicle shown in Fig. 1 as viewed from a left side.
Fig. 3 is a side view of the essential part of the vehicle body frame structure of the saddle-ride-type vehicle shown in Fig. 1 as viewed from a right side.
Fig. 4 is a front view of the essential part of the vehicle body frame structure of the saddle-ride-type vehicle shown in Fig. 1 as viewed from a front side.
Fig. 5 is a back view of the essential part of the vehicle body frame structure of the saddle-ride-type vehicle shown in Fig. 1 as viewed from a rear side.
Fig. 6 is a perspective view of the essential part of the vehicle body frame structure of the saddle-ride-type vehicle shown in Fig. 1 as viewed from a left and front upper side.
Fig. 7 is a vertical cross-sectional view of a connecting portion between a front frame and a rear frame shown in Fig. 6 taken along the vertical direction in the frame longitudinal direction (line X1-X1).
Fig. 8 is a side view showing an essential part of the vehicle body frame structure of the saddle-ride-type vehicle shown in Fig. 2 in an enlarged manner.
Fig. 9 is a transverse cross-sectional view of the connecting portion between the front frame and the rear frame by cutting the connecting portion along a frame radial direction shown in Fig. 7 (line X2-X2).
Fig. 10 is a vertical cross-sectional view of the connecting portion between the front frame and the rear frame in a vertical direction shown in Fig. 8 (line X3-X3).
Fig. 11 is an enlarged side view showing a suspension device of a power unit in the vehicle body frame structure of the saddle-ride-type vehicle shown in Fig. 1.

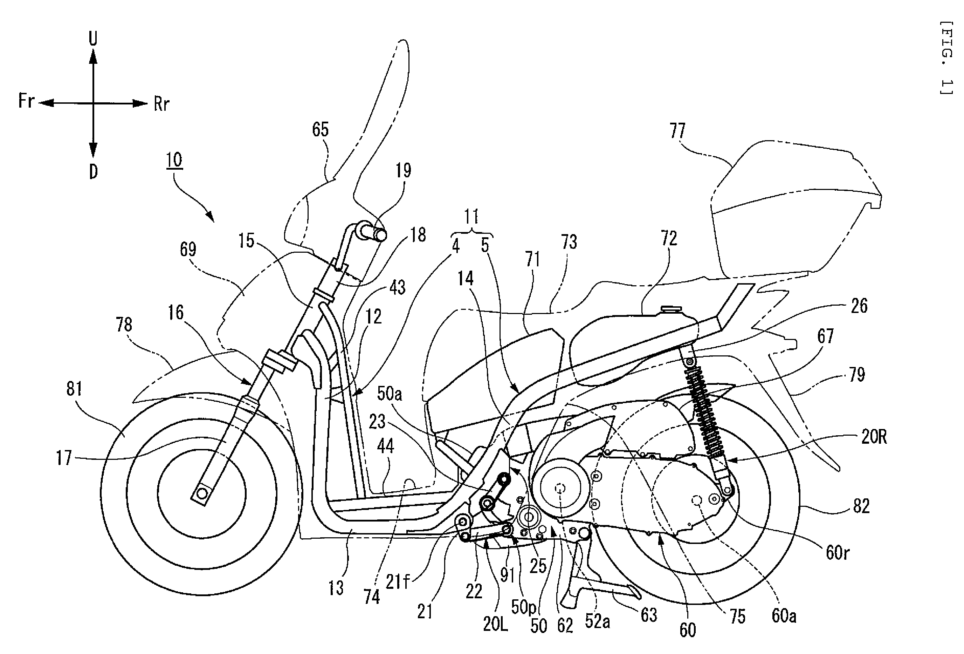

Hereinafter, a scooter-type vehicle which is a saddle-ride-type vehicle according to an embodiment of the invention is explained by reference to Fig. 1 to Fig. 11. Drawings are viewed in the direction of symbols. In the explanation made hereinafter, the directions of frontward and rearward, leftward and rightward, upward and downward are described in accordance with the directions as viewed from an operator. In the drawings, a front side of the vehicle is indicated by symbol Fr, a rear side of the vehicle is indicated by symbol Rr, a left side of the vehicle is indicated by symbol L, a right side of the vehicle is indicated by symbol R, an upper side of the vehicle is indicated by symbol U, and a lower side of the vehicle is indicated by symbol D.

As shown in Fig. 1, a scooter-type vehicle 10 includes: a vehicle body frame structure 11 described later which constitutes a framework of the vehicle; a front wheel suspension steering mechanism 16 which is provided to a vehicle front portion side for suspending and steering a front wheel 81; a unit-swing-type engine power unit 50 which is connected to a vehicle center portion by way of a suspension device (a link mechanism 20L and a rear cushion unit 20R) for suspending and driving a rear wheel 82; a storing box 71 which is arranged above the power unit 50; a fuel tank 72 which is disposed behind the storing box 71; a seat 73 which covers the storing box 71 and the fuel tank 72; a pannier case 77 which is arranged on a rear upper portion of the seat 73 and the like.

As shown in Fig. 1, the front wheel suspension steering mechanism 16 includes a front fork 17 which is steerably mounted on a headpipe 15 and supports the front wheel 81, and a bar handle 19 which is mounted on an upper end of a steering shaft 18 which is mounted on the front fork 17.

The power unit 50 includes a cylinder portion 50a which extends approximately horizontally in a state where the cylinder portion 50a is directed slightly upwardly toward a front side of the vehicle body, and a rear wheel drive transmission unit 60 which is integrally mounted on a rear portion of an engine and includes a continuously variable transmission and the like. An intake device 67 is mounted on an upper portion of the rear wheel drive transmission unit 60, and an exhaust device (not shown in the drawing) having an exhaust pipe 91 is mounted on a portion of the power unit 50 ranging from a lower portion to a right rear side of the power unit 50.

An output shaft 60a which constitutes an axle of the rear wheel 82 is disposed on a rear end side of the rear wheel drive transmission unit 60. A drive force of a crankshaft 52a disposed in the inside of a crankcase 62 is transmitted to the output shaft 60a when required. A main stand 63 is mounted on a lower portion of the crankcase 62.

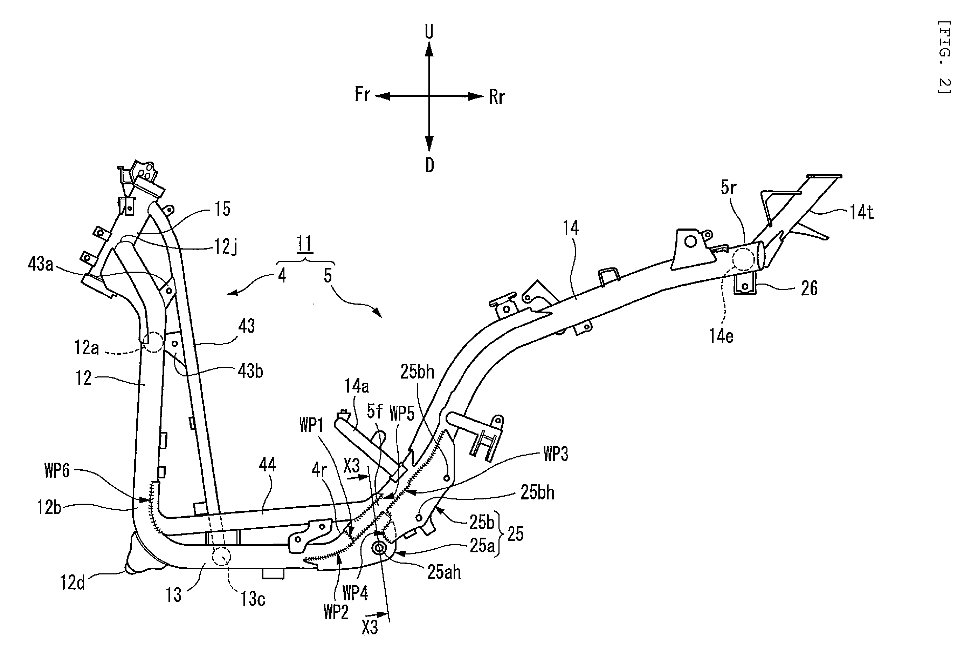

As shown in Fig. 2 to Fig. 6, the vehicle body frame structure 11 can be roughly divided into a front frame portion 4 on a vehicle front portion side and a rear frame portion 5 on a vehicle rear portion side. In this embodiment, the front frame portion 4 and the rear frame portion 5 have the same wall thickness, and are formed into a pipe shape having a circular transverse cross section.

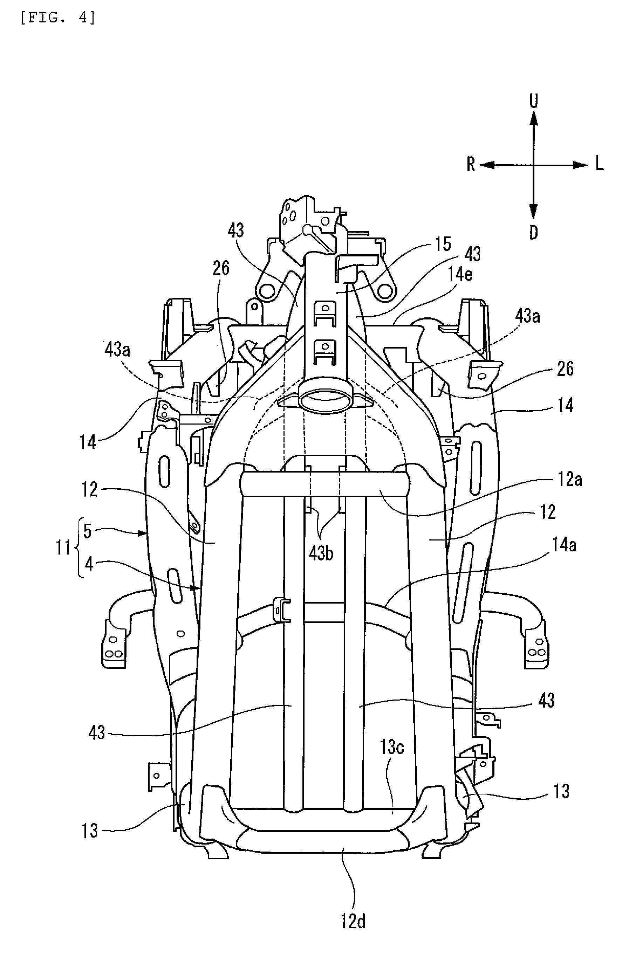

The front frame portion 4 includes: the headpipe 15 disposed on a front portion of the vehicle body; a pair of left and right down frames 12, 12 which extends downwardly from the headpipe 15; lower frames 13, 13 which extend rearwardly from lower ends of the down frames 12, 12; a pair of left and right sub frames 43, 43 which extends in the substantially vertical direction behind the down frames 12, 12; and a pair of step floor frames 44, 44 which extends along the substantially horizontal direction above the lower frames 13, 13. A down cross frame 12a (see Fig. 2 and Fig. 4) which connects the left and right down frames 12, 12 to each other is mounted on upper portions of the down frames 12, 12, and a lower cross frame 13c (see Fig. 2 and Fig. 4) which connects the left and right lower frames 13, 13 to each other is mounted between the lower frames 13, 13. A distal end cross frame 12d (see Fig. 2 and Fig. 4) which projects frontwardly and downwardly between the left and right down frames 12, 12 is mounted on lower portions (front portions of the lower frames 13, 13) of the down frames 12, 12.

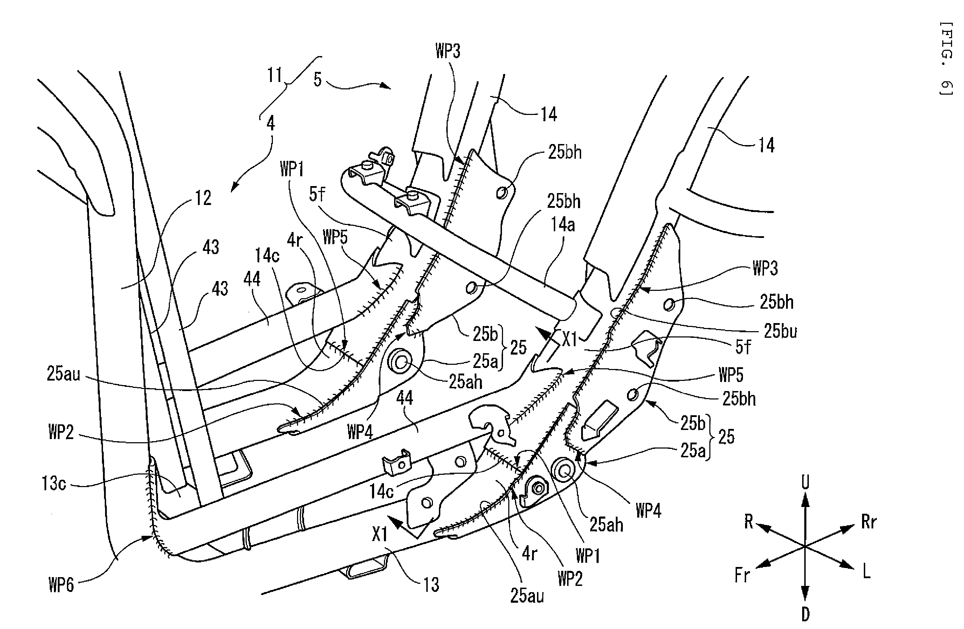

As shown in Fig. 6, the step floor frames 44, 44 are mounted such that the step floor frames 44, 44 extend between a lower portion 12b of the down frame 12, 12 and a rear frame front portion 5f. That is, the step floor frames 44, 44 are connected to the front frame portion 4 and the rear frame portion 5 at welded portions WP5 to the rear frame front portions 5f (left and right rear frame portions 5, 5) and at welded portions WP6 to the lower portions 12b, 12b of the down frames 12, 12 such that the step floor frames 44, 44 stride over the connecting portion of the front frame portion 4 and the rear frame portion 5 (frame connecting welded portions WP1 described later).

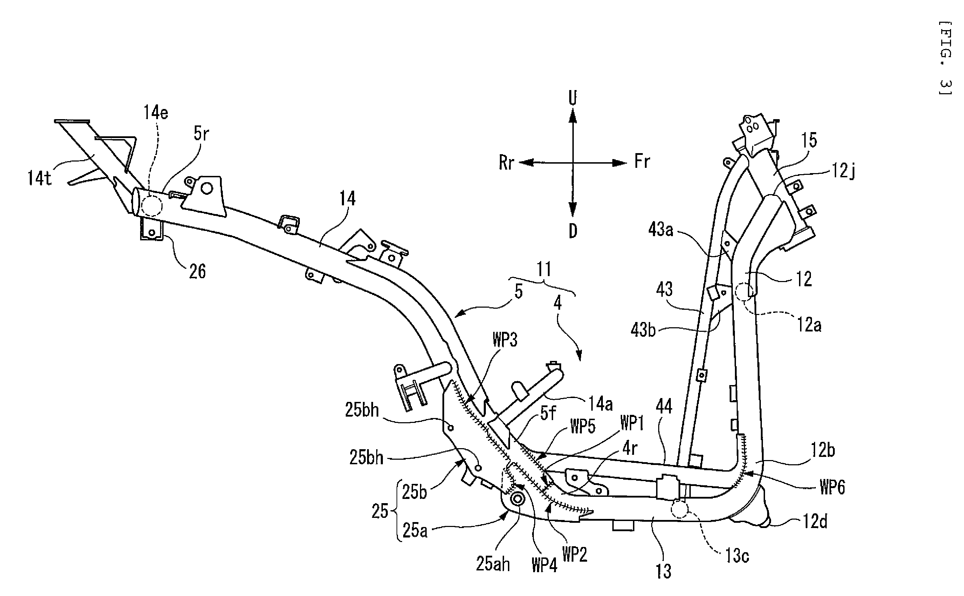

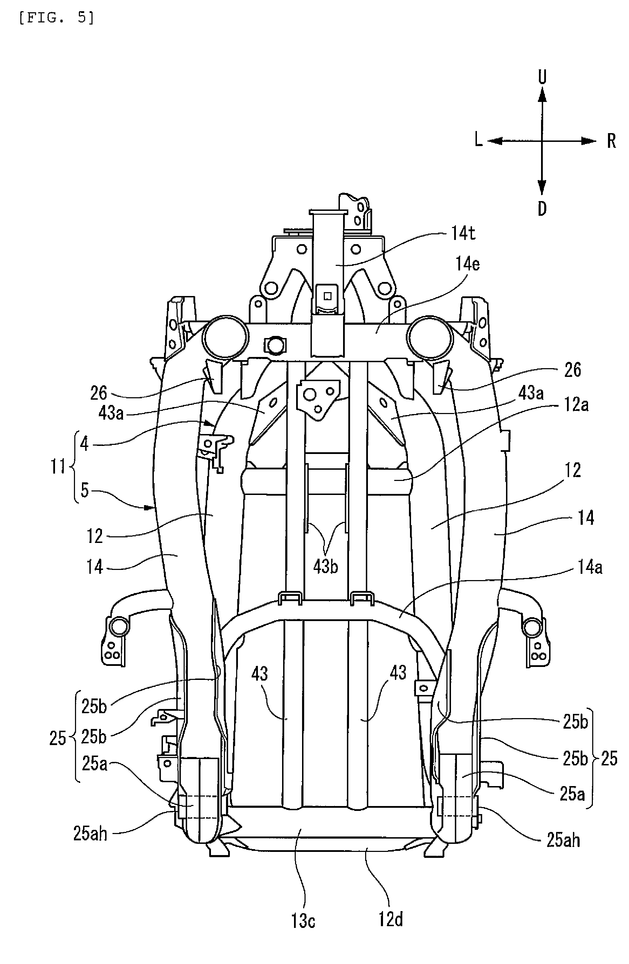

As shown in Fig. 2 and Fig. 3, the pair of left and right sub frames 43, 43 are mounted on the headpipe 15 at a position above joining portions 12j where the down frames 12, 12 are joined to the headpipe 15. On the other hand, lower end portions of the sub frames 43, 43 are connected to the lower cross frame 13c which extends between the lower frames 13, 13. The left and right sub frames 43, 43 are disposed between the left and right down frames 12, 12, and are respectively connected to the left and right sub frames 43, 43 at two portions, that is, at left and right portions on a middle portion and an upper side of the left and right down frames 12, 12 in the vertical direction. That is, as connecting portions, direct connecting portions 43a, 43a which directly connect the frames arranged in the longitudinal direction to each other, and indirect connecting portions 43b which indirectly connect the frames arranged in the longitudinal direction to each other by way of the down cross frame 12a are provided (see Fig. 2 and Fig. 5).

The rear frame portion 5 includes: a pair of left and right rear frames 14, 14; and a rear front-portion cross member 14a on a rear frame front portion side and a rear rear-portion cross member 14e on a rear frame rear portion side which constitute cross members for connecting the left and right rear frames 14, 14 to each other. The rear front-portion cross member 14a largely projects frontwardly and upwardly in an arch shape thus forming a space for receiving a front portion of the engine and, at the same time, is configured to support a lower end of a front portion of the storing box 71. The rear rear-portion cross member 14e connects rear portion sides of the rear frames 14, 14 to each other thus enhancing the frame rigidity. The rear rear-portion cross member 14e also includes a tail pipe 14t which extends rearwardly and upwardly from the center of the rear rear-portion cross member 14e in the lateral direction, and the pannier case 77 or the like can be fixed to the tail pipe 14t, for example.

On the front frame portion 4, various brackets are mounted for mounting cover members such as a handle cover 65, a front cover 69, a step floor 74 and a front fender 78, and other various equipments.

On the rear frame portion 5, various brackets are mounted for mounting cover members such as a side cover 75 and a rear fender 79 and, further, the seat 73, the fuel tank 72 and the like. A front bracket 25 and a rear bracket 26 (see Fig. 2, Fig. 3 and Fig. 11) for suspending the power unit 50 are also mounted on the rear frame portion 5.

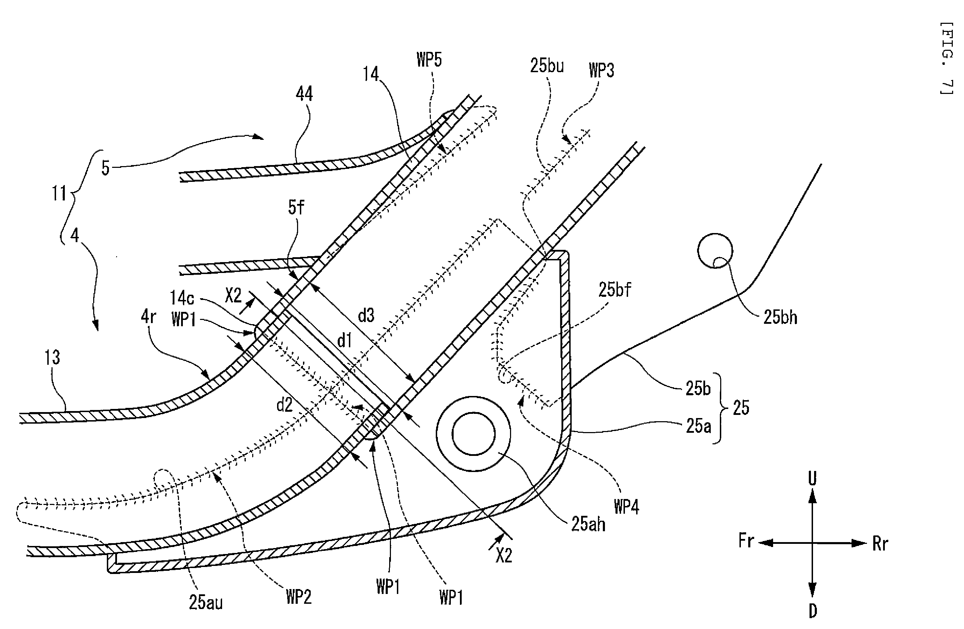

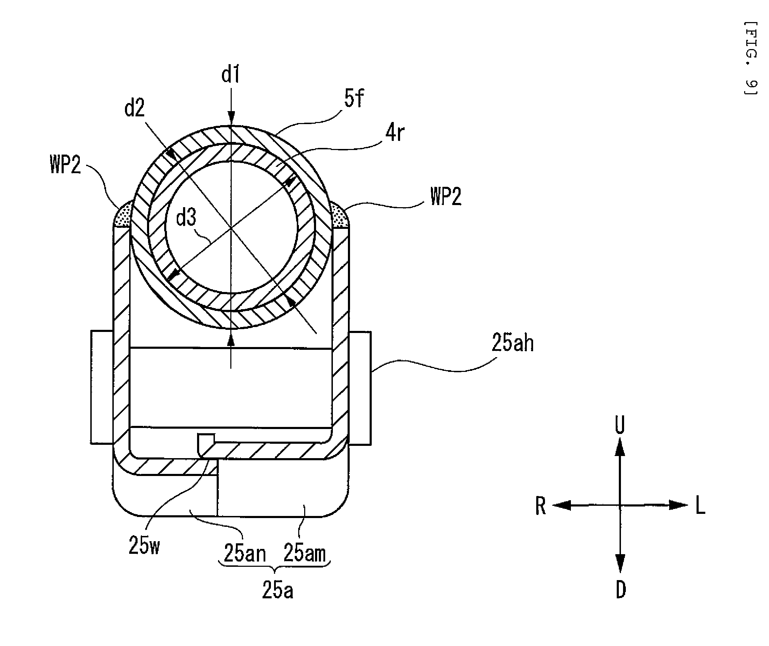

As shown in Fig. 7, an outer diameter d1 of the rear frame 14 of the rear frame portion 5 is set larger than an outer diameter d2 of the lower frame 13 of the front frame portion 4 (see also Fig. 9 which is a cross-sectional view taken along a line X2-X2 in Fig. 7). Due to such a constitution, the rigidity of the rear frame 14 becomes higher than the rigidity of the lower frame 13. As a result, the rigidity of the rear frame portion 5 can be made higher than the rigidity of the front frame portion 4 even when a wall thickness of the rear frame portion 5 is not increased.

An inner diameter d3 of the rear frame 14 is set larger than the outer diameter d2 of the lower frame 13. Accordingly, a front frame rear portion 4r on a rear portion side of the front frame portion 4 can be inserted into the inside of the rear frame front portion 5f.

By setting diameters of the frames at the connecting portion to sizes which allow the insertion of one frame into the other frame in this manner, in an operation of connecting the rear frame front portion 5f and the front frame rear portion 4r to each other, the front frame rear portion 4r can be easily inserted into the rear frame front portion 5f by making a rear end of the front frame rear portion 4r abut a distal end of the rear frame front portion 5f. Further, by connecting the whole circumference of a rear frame distal end edge 14c by welding after the insertion of the front frame rear portion 4r into the rear frame front portion 5f, a frame connecting welded portion WP1 is formed so that the front frame portion 4 and the rear frame portion 5 are joined to each other.

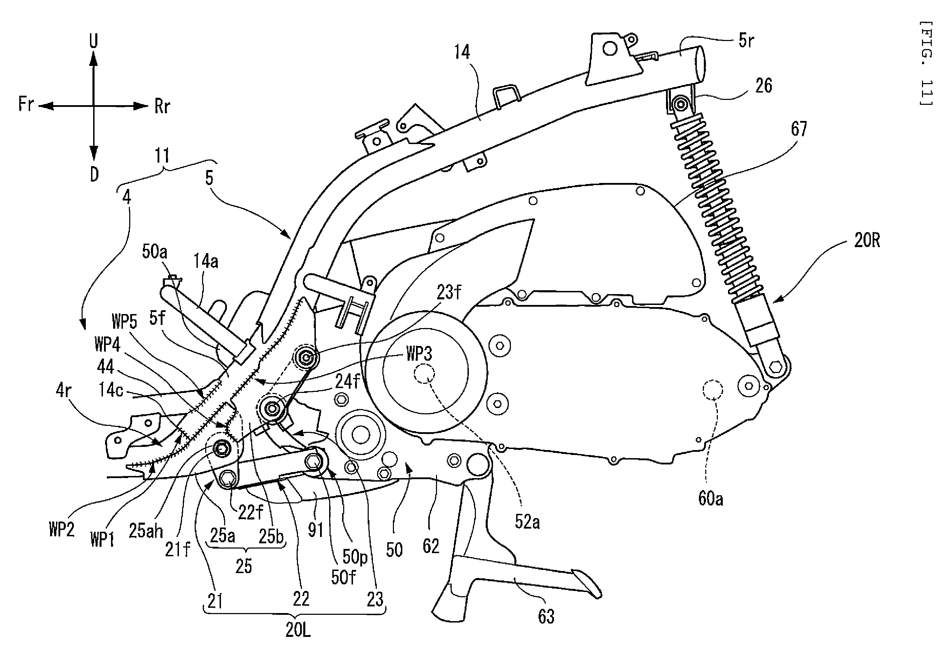

The front bracket 25 in this embodiment is provided to the left and right rear frames 14, 14 respectively, and the front bracket 25 is constituted of a pivoting bracket 25a and a link supporting bracket 25b (see Fig. 7 and Fig. 11).

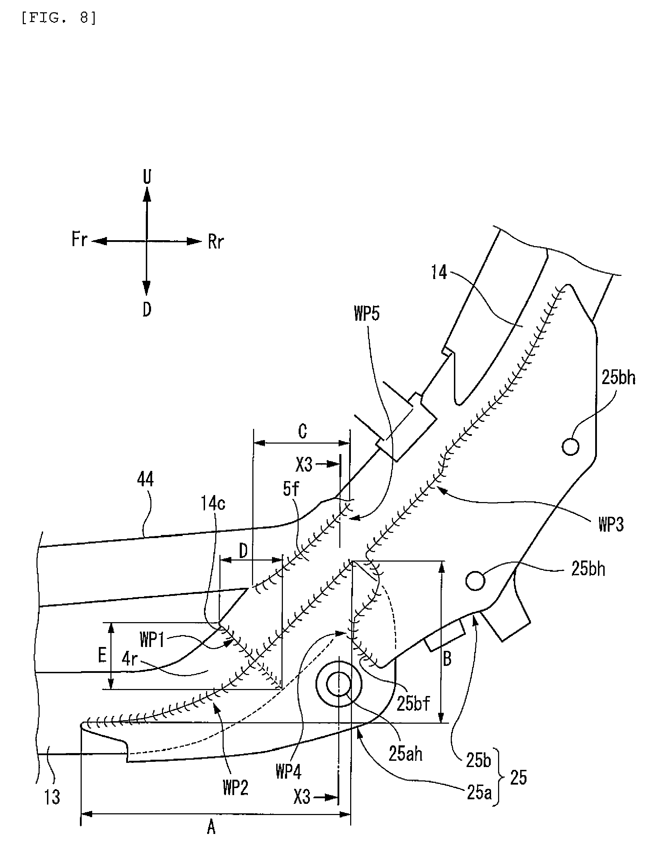

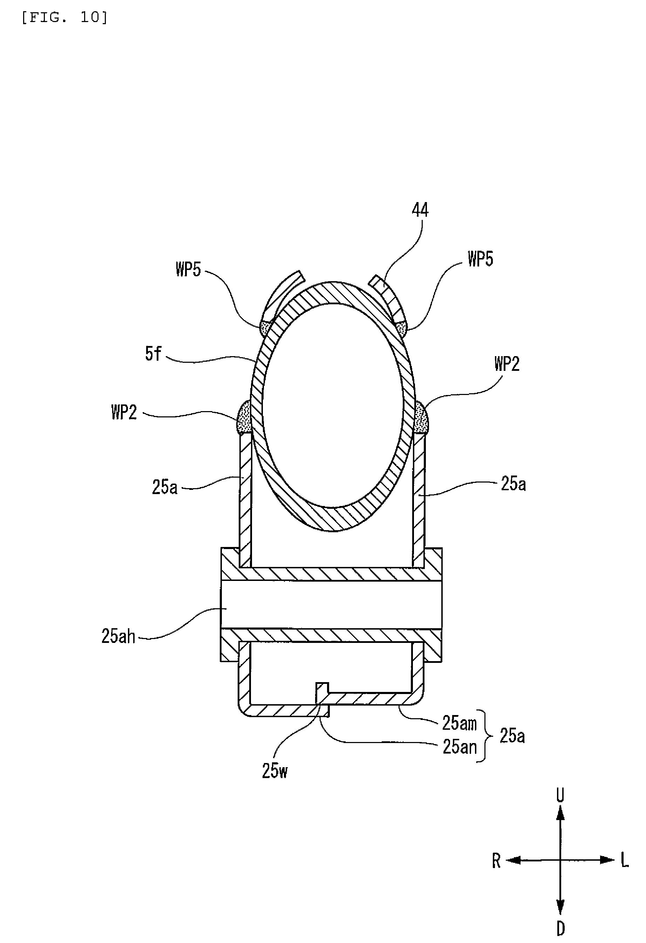

The pivoting bracket 25a has the box-shaped structure (see Fig. 5 and Fig. 6) where the pivoting bracket 25a covers the lower frame 13 and the rear frame 14 from below so as to stride over the lower frame 13 and the rear frame 14, holds a pivot bearing portion 25ah in a state where the pivot bearing portion 25ah is slightly exposed from both left and right sides (see Fig. 5). The pivoting bracket 25a is also formed into rearwardly projecting shape so as to surround the pivot bearing portion 25ah from behind and below as viewed in a side view (see Fig. 7 and Fig. 8). That is, as shown in Fig. 9 and Fig. 10 which are cross-sectional views, the pivoting bracket 25a has the structure which may be referred to a sandwich-shaped structure which is formed by working such that two metal plates 25an, 25am which are mounted on the rear frame 14 and the lower frame 13 by way of both left and right bracket welded portions WP2 are made to overlap with each other at a lower overlapping portion 25w.

On the other hand, the link supporting bracket 25b is continuously formed on a rear upper portion of the pivoting bracket 25a. The link supporting bracket 25b is constituted of two plate members which are in contact with outer sides of left and right side surfaces of the pivoting bracket 25a in a partially overlapping manner (two plate members forming the left link supporting bracket 25b and two plate members forming the right link supporting bracket 25b, that is, four plate members in total). Each plate member has two support shaft holes 25bh, that is, upper and lower support shaft holes 25bh.

As shown in Fig. 6 and Fig. 7, with respect to the pivoting brackets 25a, four bracket welded portions WP2 in total are formed on both left and right sides along upper edge portions 25au, 25au of the respective pivoting brackets 25a (inside and outside in the vehicle width direction with respect to the left and right rear frames 14, 14 and the left and right lower frames 13, 13). The bracket welded portion WP2 is formed over the frame connecting welded portion WP1 in the direction that the bracket welded portion WP2 intersects with the frame connecting welded portion WP1 (direction along the frame). The pivoting brackets 25a are mounted on the lower frame 13 and the rear frame 14 so as to stride over the lower frame 13 and the rear frame 14, that is, the rear frame front portion 5f and the front frame rear portion 4r.

As shown in Fig. 8 in an enlarged manner, a longitudinal length A of the bracket welding connecting portion WP2 is set larger than a longitudinal length C of a welded portion WP5 of the step floor frame 44. Further, the bracket welded portion WP2 and the welded portion WP5 of the step floor frame 44 are arranged so as to overlap with each other in the longitudinal direction of the vehicle (in this embodiment, the longitudinal length C of the welded portion WP5 falling within a range of the length A of the bracket frame connecting welded portion WP2). A length D of the frame connecting welded portion WP1 in the longitudinal direction of the vehicle is positioned within a range of the length A of the bracket welded portion WP2, and a length E of the frame connecting welded portion WP1 in the vertical direction of the vehicle is also positioned within a range of a length B of the bracket welded portion WP2 in the vertical direction. Accordingly, a reinforcing effect brought about by both welded portions WP2, WP5 can be enhanced.

The pivot bearing portion 25ah is arranged within a range of the longitudinal length A and within a range of the vertical length B of the bracket welded portion WP2. Further, a front end portion 25bf of the link supporting bracket 25b extends to a position close to the pivot bearing portion 25ah and hence, the bracket welded portion WP3 is formed at a position close to the pivot bearing portion 25ah. Accordingly, the rigidity of an area in the vicinity of the pivot bearing portion 25ah can be enhanced.

Respective upper edge portions 25bu of the link supporting brackets 25b are connected by welding to the rear frame 14 by way of the bracket welded portions WP3 on both inner and outer sides of the rear frame 14. Front lower portions of the link supporting brackets 25b overlap with a rear end side of the pivoting brackets 25a, and a bracket connecting welded portion WP4 is formed on the overlapping portions (four overlapping portions in total consisting of two overlapping portions on a left side and two overlapping portions on a right side) so that the pivoting bracket 25a and the link supporting bracket 25b are connected to each other.

As shown in Fig. 11, the link mechanism 20L which suspends the power unit 50 includes a first link member 21, a second link member 22, and third link members 23, for example, and supports a front lower portion of the power unit 50. To be in more detail, the first link member 21 is rotatably supported on a support shaft 21f which penetrates the pivot bearing portion 25ah, and the second link member 22 is connected to an engine-side pivot portion 50p by way of a support shaft 22f positioned below the support shaft 21f and a pivot support shaft 50f. Further, the pair of left and right third link members 23, 23 which is bent frontwardly as viewed in a side view has upper portion sides thereof supported on the link supporting brackets 25b by way of an upper end support shaft 23f and an intermediate support shaft 24f which pass through support shaft holes 25bh formed in the link supporting bracket 25b, and has lower portion sides thereof supported on the pivot support shaft 50f.

Further, the rear cushion unit 20R is a buffering and supporting portion which is mounted in an extending manner between a rear end portion 60r of the rear wheel drive transmission unit 60 and the rear bracket 26 of the rear frame 14.

As described above, in this embodiment, the rear frame portion 5 on which the front and rear brackets 25, 26 for supporting the power unit 50 is formed with the diameter larger than the diameter of the front frame portion 4 (d1>d2) and hence, it is possible to ensure rigidity of the rear frame portion 5 which supports a region where the heaviest portion of the vehicle body is supported. Further, the front frame portion 4 on a vehicle front side is formed with the diameter smaller than the diameter of the rear frame portion 5 on a vehicle rear side and hence, the constitution contributes to the reduction of the weight of the vehicle body.

In this embodiment, the front bracket 25 which supports the power unit 50 is mounted in an extending manner between the rear frame front portion 5f and the front frame rear portion 4r and hence, the front bracket 25 can function as a reinforcing joining member of a joining portion between the rear frame front portion 5f and the front frame rear portion 4r. As a result, rigidity of the vehicle body frame structure can be enhanced without providing the particular reinforcing member for enhancing rigidity of the joining portion between the rear frame front portion 5f and the front frame rear portion 4r whereby rigidity of the frame can be enhanced while suppressing the increase of the weight of the vehicle body.

In this embodiment, the inner diameter d3 of the rear frame portion 5 is set larger than the outer diameter d2 of the front frame portion 4. Accordingly, at the time of assembling the front frame portion 4 and the rear frame portion 5 to each other, in an insertion operation of the joining portion, the joining portion can be easily inserted without applying particular working to the joining portion. As a result, it is possible to provide the vehicle body frame structure 11 having favorable workability and favorable assembling property at the time of assembling the frames.

In this embodiment, the step floor frame 44 is mounted between the lower portion of the down frame 12 and the rear frame front portion 5f and hence, the step floor frame 44 is mounted so as to stride over the joining portion between the front frame portion 4 and the rear frame portion 5 whereby rigidity of the joining portion can be further enhanced.

In this embodiment, the front bracket 25 has the pivoting bracket 25a fixed to the front frame portion 4 and the link supporting bracket 25b fixed to the rear frame portion 5, and the pivoting bracket 25a and the link supporting bracket 25b are connected to each other. Accordingly, the front bracket 25 is mounted such that the front bracket 25 largely strides over the joining portion between the front frame portion 4 and the rear frame portion 5 and hence, rigidity of the joining portion and rigidity of areas in front of and behind the joining portion can be effectively increased.

In this embodiment, the pair of left and right sub frames 43, 43 is joined at the position above the joining portion 12j of the down frame 12 with the head pipe 15 and is connected to the lower cross frame 13c disposed between the lower frames 13, 13 and hence, rigidity of the vehicle body frame structure 11 can be increased even when the diameter of the down frame 12 is not set large. Further, the vehicle body frame structure 11 adopts the structure where the sub frames 43, 43 are arranged parallel to each other in the lateral direction of the vehicle body so as to increase rigidity of the front frame portion 4 and hence, a space in the longitudinal direction of the vehicle body can be easily ensured whereby a space of the step floor 74 can be largely ensured.

Although one embodiment of the invention has been explained heretofore, the invention is not limited to the above-mentioned embodiment, and can be suitably changed. For example, although the respective frames are formed into a pipe shape having a circular cross section, a cross-sectional shape of the pipe is not limited to the circular shape, and may be an elliptical shape, a rectangular shape, or other polygonal shape.

Further, in the above-mentioned embodiment, the invention is applied to the scooter-type vehicle. However, the application of the invention is not limited to the scooter-type vehicle, and the invention is also applicable to other saddle-ride-type vehicles.

### Description of Reference Numerals and Signs

- 4:: front frame portion
- 4r:: front frame rear portion
- 5:: rear frame portion
- 5f:: rear frame front portion
- 5r:: rear frame rear portion
- 10:: scooter-type vehicle (saddle-ride-type vehicle)
- 11:: vehicle body frame structure
- 15:: headpipe
- 12:: down frame
- 12j:: joining portion
- 13:: lower frame
- 13c:: lower cross frame
- 14:: rear frame
- 20L:: link mechanism
- 25:: front bracket
- 25a:: pivoting bracket
- 25b:: link supporting bracket
- 26:: rear bracket
- 43:: sub frame
- 44:: step floor frame
- 50:: power unit
- 74:: step floor
- d1:: outer diameter of rear frame
- d2:: outer diameter of lower frame
- d3:: inner diameter of rear frame

## Claims

1. A saddle-ride-type vehicle (10) including a vehicle body frame structure (11) comprising:
a front frame portion (4) on a vehicle front side having a down frame (12) extending downwardly from a head pipe (15) and a lower frame (13) extending rearwardly from a lower end of the down frame (12); and
a rear frame portion (5) on a vehicle rear side having a rear frame (14) extending upwardly and rearwardly from a rear end of the lower frame (13), wherein the front frame portion (4) and the rear frame portion (5) are formed into a pipe shape, a front frame rear portion (4r) is inserted into a radially inside of a rear frame front portion (5f) disposed at a front side of the rear frame portion (5), and the front frame rear portion (4r) is joined to the rear frame front portion (5f) by welding,
**characterized in that**
a front bracket (25) which supports a power unit (50) is mounted in an extending manner between the rear frame front portion (5f) and the front frame rear portion (4r).

2. The saddle-ride-type vehicle according to claim 1, wherein an inner diameter (d3) of the rear frame (14) is set larger than the outer diameter (d2) of the lower frame (13) at the front frame rear portion (4r).

3. The saddle-ride-type vehicle according to claim 1 or 2, wherein a step floor frame (44) on which a step floor (74) for a rider is mounted, is mounted between a lower portion of the down frame (12) and the rear frame front portion (5f).

4. The saddle-ride-type vehicle according to any one of claims 1 to 3, wherein the front bracket (25) includes a pivoting bracket (25a) which pivotally supports the power unit (50), and a link supporting bracket (25b) which supports a portion of a link mechanism (20L) which supports the power unit (50) by way of a link, and
the pivoting bracket (25a) and the link supporting bracket (25b) are connected to each other.

5. The saddle-ride-type vehicle according to any one of claims 1 to 4, wherein a pair of left and right sub frames (43) is joined to a lower cross frame (13c) and is joined to a portion of the head pipe (15) at a position above a joining portion (12j) of the down frame (12) with the head pipe (15), wherein the lower cross frame (13c) is disposed between the lower frames (13) provided in left and right pair.

## Patentansprüche

1. Fahrzeug vom Sattelfahrtyp (10), das eine Fahrzeugkarosserierahmenkonstruktion (11) hat, aufweisend:
einen vorderen Rahmenabschnitt (4) an einer Fahrzeugvorderseite, der einen Abwärtsrahmen (12) hat, der sich nach unten von einem Kopfrohr (15) erstreckt, und einen unteren Rahmen (13), der sich nach hinten von einem unteren Ende des Abwärtsrahmens (12) erstreckt; und
einen hinteren Rahmenabschnitt (5) an einer Fahrzeughinterseite, der einen hinteren Rahmen (14) hat, der sich nach oben und hinten von einem hinteren Ende des unteren Rahmens (13) erstreckt, wobei
der vordere Rahmenabschnitt (4) und der hintere Rahmenabschnitt (5) in einer Rohrform gebildet sind, wobei ein hinterer Abschnitt (4r) des vorderen Rahmens in eine radiale Innenseite des vorderen Abschnitts (5f) des hinteren Rahmens eingesetzt ist, der an einer vorderen Seite des hinteren Rahmenabschnitts (5) angeordnet ist, und der hintere Abschnitt des vorderen Rahmens (4r) mit dem vorderen Abschnitt des hinteren Rahmens (5f) durch Schweißen verbunden ist, **dadurch gekennzeichnet, dass**
eine vordere Halterung (25), die eine Antriebseinheit (50) trägt, in einer sich erstreckenden Weise zwischen dem vorderen Abschnitt (5f) des hinteren Rahmens und dem hinteren Abschnitt (4r) des vorderen Rahmens montiert ist.

2. Fahrzeug vom Sattelfahrtyp gemäß Anspruch 1, wobei ein innerer Durchmesser (d3) des hinteren Rahmens (40) größer ist als ein äußerer Durchmesse (d2) des unteren Rahmens (13) an dem hinteren Abschnitt (4r) des vorderen Rahmens.

3. Fahrzeug vom Sattelfahrtyp gemäß Anspruch 1 oder 2, wobei ein Bodenblechrahmen (44) an dem ein Bodenblech (74) für einen Fahrer montiert ist, zwischen einem unteren Abschnitt des Abwärtsrahmens (12) und dem vorderen Abschnitt (5f) des hinteren Rahmens befestigt ist.

4. Fahrzeug vom Sattelfahrtyp gemäß einem der Ansprüche 1 bis 3, wobei die vordere Halterung (25) eine drehbare Halterung (25a) umfasst, die die Antriebseinheit (50) drehbar trägt, und eine Verbindungsstützhalterung (25b), die einen Abschnitt eines Verbindungsmechanismus (201) stützt, der die Antriebseinheit (50) im Wege einer Verbindung stützt, und wobei die drehbare Halterung (25a) und die Verbindungsstützhalterung (25b) miteinander verbunden sind.

5. Fahrzeug vom Sattelfahrtyp gemäß einem der Ansprüche 1 bis 4, wobei ein Paar von linken und rechten Unterrahmen (43) mit einem unteren Querrahmen (13c) verbunden ist und mit einem Abschnitt der Kopfrohrs (15) an einer Position oberhalb des Verbindungsabschnitts (12j) des Abwärtsrahmens (12) mit dem Kopfrohr (15) verbunden ist, wobei der untere Querrahmen (13c) zwischen den unteren Rahmen (13) angeordnet ist, die in dem linken und rechten Paar vorgesehen sind.

## Revendications

1. Véhicule de type à selle (10) comportant une structure de cadre de caisse de véhicule (11) comprenant :
une portion de cadre avant (4) sur un côté avant de véhicule ayant un cadre descendant (12) s'étendant vers le bas depuis un tube de direction (15) et un cadre inférieur (13) s'étendant vers l'arrière depuis une extrémité inférieure du cadre descendant (12) ; et
une portion de cadre arrière (4) sur un côté arrière de véhicule ayant un cadre arrière (14) s'étendant vers le haut et vers l'arrière depuis une extrémité arrière du cadre inférieur (13), dans lequel
la portion de cadre avant (4) et la portion de cadre arrière (5) sont en forme de tube,
une portion arrière de cadre avant (4r) est insérée dans un intérieur radial d'une portion avant de cadre arrière (5f) disposé d'un côté avant de la portion de cadre arrière (5), et la portion arrière de cadre avant (4r) est assemblée à la portion avant de cadre arrière (5f) par soudage,
**caractérisé en ce que**
une console avant (25) qui supporte un bloc-moteur (50) est montée de manière étendue entre la portion avant de cadre arrière (5f) et la portion arrière de cadre avant (4r).

2. Véhicule de type à selle selon la revendication 1, dans lequel un diamètre intérieur (d3) du cadre arrière (14) est réglé supérieur au diamètre extérieur (d2) du cadre inférieur (13) au niveau de la portion arrière de cadre avant (4r).

3. Véhicule de type à selle selon la revendication 1 ou 2, dans lequel un cadre de marchepied (44) sur lequel un marchepied (74) pour un motocycliste est monté, est monté entre une portion inférieure du cadre descendant (12) et la portion avant de cadre arrière (5f).

4. Véhicule de type à selle selon l'une quelconque des revendications 1 à 3, dans lequel la console avant (25) comporte une console pivotante (25a) qui supporte en pivotement le bloc moteur (50), et une console de support d'articulation (25b) qui supporte une portion d'un mécanisme d'articulation (20L) qui supporte le bloc-moteur (50) au moyen d'une articulation, et
la console pivotante (25a) et la console de support d'articulation (25b) sont reliées l'une à l'autre.

5. Véhicule de type à selle selon l'une quelconque des revendications 1 à 4, dans lequel une paire de sous-cadres gauche et droit (43) est assemblée à un cadre croisé inférieur (13c) et est assemblée à une portion du tube de direction (15) à une position au-dessus d'une portion d'assemblage (12j) du cadre descendant (12) avec le tube de direction (15), dans lequel le cadre croisé inférieur (13c) est disposé entre les cadres inférieurs (13) prévus en paire gauche et droit.
